# EUROPEAN PATENT SPECIFICATION

(11) **EP 1 449 463 B1**
(45) Date of publication and mention of the grant of the patent: **25.07.2007**
(21) Application number: 02783609.7
(22) Date of filing: 25.11.2002
(51) Int. Cl.: A47C 27/14, A47C 7/18, B29C 39/02, B29C 39/24, C08G 18/48

(54) **SEAT PAD FOR VEHICLE**
SITZPOLSTER FÜR FAHRZEUG
COUSSIN DE SIEGE POUR VEHICULE

(30) Priority: 26.11.2001 JP 2001359683
(43) Date of publication of application: 25.08.2004
(73) Proprietor: Bridgestone Corporation, Tokyo 104-8340 (JP); TS Tech Co., Ltd, Asaka-shi, Saitama 351-0012 (JP)
(72) Inventor: SUGIYAMA, Naoto, c/o Bridgestone Corppration, Yokohama-shi, Kanagawa 244-0812 (JP); EBE, Kazushige, c/o Bridgestone Corporation, Yokohama-shi, Kanagawa 244-0812 (JP); KAWASHIMA, Isao, c/o TS TECH CO., LTD., Shioya-gun, Tochigi 329-1217 (JP)
(74) Representative: Whalley, Kevin
(86) International application number: PCT/JP2002/012260
(87) International publication number: WO 2003/045198

(56) References cited:
- WO-A-98/11148
- GB-A- 2 144 071
- GB-A- 2 157 559
- GB-A- 2 306 910
- JP-A- 10 087 779
- JP-A- 10 192 097
- JP-A- 2000 189 289
- JP-A- 2001 161 506
- US-A- 4 379 856
- US-A- 5 442 823
- 'Polyurethane Jushi Handbook', 25 September 1987, THE NIKKAN KOGYO SHUNBUN, LTD, JAPAN XP002965215 pages 160-162, 186-205

## Description

### FIELD OF THE INVENTION

The present invention relates to a seat pad for vehicle which is formed by foaming an urethane raw material and, more particularly, to a seat pad for vehicle in which an urethane raw material for forming an under-buttocks section has an isocyanate index which is different from that of an urethane raw material for forming an under-thighs section so that the hardness of the under-thighs section is lower than that of the under-buttocks section.

### BACKGROUND OF THE INVENTION

Generally, a seat pad for vehicle is made of a flexible polyurethane foam or a semi-rigid polyurethane foam.

For the purpose of improving the occupant's comfort of the seat pad for vehicle when seated while ensuring the support stability and the safety and for the purpose of reducing the tiredness due to long-period of seating, the improvements on the cushion property, the hardness or rigidity, the vibrational absorption property have been made by modifying the material or the structure.

The seat pad for vehicle mainly comprises an under-buttocks section and an under-thighs section as its seating portion, and side bulging sections on both sides of the seating portion. The side bulging sections of the seat pad for vehicle may be formed by polyurethane foams of which hardness is higher than that of the polyurethane foam for forming the under-buttocks section in order to improve the holding property and the appearance thereof. The under-thighs section of the seat pad for vehicle may be formed by a polyurethane foam, a slab member, or another separate member which is softer than the polyurethane foam for forming the under-buttocks section in order to provide improved touch and improved elasticity.

Conventionally, such a seat pad for vehicle of which hardness varies according to portions is manufactured by preparing three kinds of urethane raw materials as raw materials i.e. an urethane raw material for the side bulging sections, an urethane raw material for the under-buttocks section, and an urethane raw material for the under-thighs section, and injecting these urethane raw materials into a mold at once or with time differences.

Polyurethane foam is generally formed as follows. A catalyst, a foaming agent, and other additives are mixed with a polyol component in predetermined proportions so as to prepare a liquid compound (hereinafter, referred to as "polyol-containing liquid"). The polyol-containing liquid and an isocyanate component are mixed to prepare an urethane raw material just before the molding. The urethane raw material is foamed, thereby forming the polyurethane foam.

Conventionally, when three kinds of urethane raw materials of different hardness are used for forming a seat pad for vehicle, the urethane raw materials have different content rates of polyol-containing liquid.

There are the following problems when the seat pad for vehicle is formed by using, as the urethane raw material forming the seat pad for vehicle, different urethane raw materials for the under-buttocks section and the under-thighs section.
(1) Since the different urethane raw materials (i.e. different polyol-containing liquid) have different reaction speeds, the reaction control during the foaming in the same mold is difficult. Accordingly, obtained products may have a defect such as void and/or air trap. If there is such a defect on a boundary between the under-buttocks section and the under-thighs section which form together the seating portion, the seat pad for vehicle must be uncomfortable.
(2) Because three kinds of urethane raw materials are used, it is required to provide piping installations such as tank and pipe for every urethane raw material. Accordingly, the equipment must be large and the cost of the equipment must be high. In addition, man-hours are required to procure materials and prepare the respective liquid materials, thereby increasing the manufacturing cost.
(3) It is preferable that the side bulging sections have hardness and other properties clearly different from those of the under-buttocks section and the under-thighs section which form together the seating portion. On the other hand, even though the under-buttocks section and the under-thighs section have different hardness, it is preferable that the under-buttocks section and the under-thighs section have similar texture and touch for comfortable sitting because the under-buttocks section and the under-thighs section form together the same seating portion. When urethane raw materials containing polyol-containing liquid of different components are used, not only the hardness but also the texture may be different. In this case, an occupant sitting on the seat pad feels discomfort. It is difficult to provide a comfortable seat pad.

There is another way to impart soft touch to the under-thighs section by designing the configuration of the back of the under-thighs section even when the under-buttocks section and the under-thighs section are made of an urethane raw material of the same composition. In case that the urethane raw material of the same composition is used and the soft touch is imparted to the under-thighs section by designing the configuration, the obtainable soft touch is limited and the level of soft touch required for the under-thighs section can not be obtained. If the hardness of the seating portion is reduced entirely in order to increase the level of soft touch of the under-thighs section, the under-buttocks section becomes too soft. With too soft under-buttocks section of the seat pad for vehicle, the under-buttocks section is squashed by the sitting occupant so that the occupant feels just like directly touching the

bottom.

US-A-4 379 856 discloses a polyurethane foam moulding made from the reaction product of a polyether polyol and a polyisocyanate component.

### SUMMARY OF THE INVENTION

The present invention solves the aforementioned conventional problems and has an object to provide a seat pad for vehicle in which an under-buttocks section and an under-thighs section are formed to have optimal hardness or rigidity by using polyol-containing liquid of the same composition.

At least an under-buttocks section and an under-thighs section of a seating portion of a seat pad for vehicle of the present invention are manufactured by foaming urethane raw materials made by mixing polyol-containing liquid and an isocyanate component. The urethane raw material for forming the under-buttocks section and the urethane raw material for forming the under-thighs section are prepared from the polyol-containing liquid of the same composition. The hardness of the under-thighs section is set to be lower than the hardness of the under-buttocks section by setting the isocyanate indexes of the urethane raw materials different from each other.

In the urethane raw materials of the polyol-containing liquid of the same composition and the isocyanate component, the decrease in isocyanate index achieves the forming of a polyurethane foam having lower hardness and softer touch.

In the seat pad for vehicle of the present invention, even when the polyol-containing liquid of the same composition and the isocyanate component are used, the under-buttocks section and the under-thighs section can be formed to have different hardness by setting the isocyanate indexes of the urethane raw materials different from each other.

In the present invention, the isocyanate index of the urethane raw material for the under-thighs section is set to be lower than the isocyanate index of the urethane raw material for the under-buttock section by using the polyol-containing liquid of the same composition and the isocyanate component, whereby the under-buttocks section has high hardness so as to have excellent seating stability, while the under-thighs section is flexible so as to have soft touch.

There is no difference in reaction speed between the urethane raw materials made by using the polyol-containing liquid of the same composition and the isocyanate component but having different isocyanate indexes. There is no or little possibility of occurrence of defects such as void and/or air trap as mentioned above when the urethane raw materials are injected into a mold so that excellent molding property is provided.

According to the urethane raw materials using the polyol-containing liquid of the same composition and the isocyanate component, there is no or little difference in texture and touch between the under-buttocks section and the under-thighs section, thereby providing a comfortable seating portion.

According to the present invention, common piping installations such as tanks and pipes can be used for the polyol-containing liquid and the isocyanate component as raw materials for the under-buttocks section and the under-thighs section, thereby reducing the number of tanks and parts of the piping installations and reducing the equipment expenses. Man-hours required to procure materials and prepare the respective liquid materials can be also reduced, thereby reducing the manufacturing cost.

### BRIEF DESCRIPTION OF THE DRAWINGS

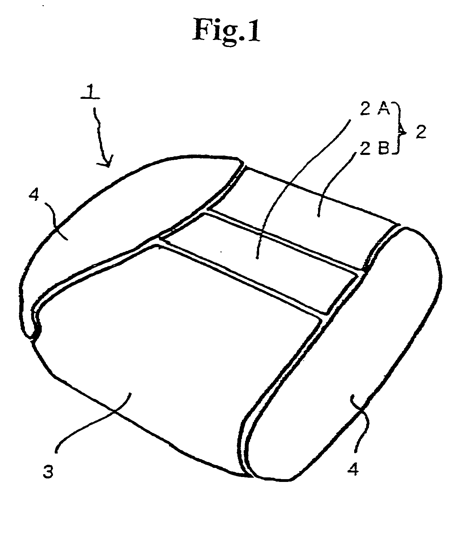

FIG. 1 is a perspective view showing an embodiment of a seat pad for vehicle.

### Preferred Embodiments

Hereinafter, an embodiment of a seat pad for vehicle according to the present invention will be described with reference to the drawing.

FIG. 1 is a perspective view showing an embodiment of a seat pad for vehicle.

A seat pad 1 for vehicle of Fig. 1 comprises an under-buttocks section 2, an under-thighs section 3, and side bulging sections 4. The under-buttocks section 2 comprises a proximal portion 2A and a rear end portion 2B.

In the present invention, an urethane raw material for the under-buttocks section 2 and an urethane raw material for the under-thighs section 3 of the seat pad 1 for vehicles are both composed of polyol-containing liquid of the same composition and the same isocyanate component, but are set to have different isocyanate indexes so as to create difference in hardness between the under-buttocks section 2 and the under-thighs section 3 such that the under-buttocks section 2 has high hardness so as to have excellent seating stability, while the under-thighs section 3 has low hardness so as to have soft touch.

The side bulging sections 4 are desired to have sufficiently high hardness compared to the under-buttocks section 2 in view of improvements of the holding property and the appearance thereof. It is difficult to form the side bulging sections 4 satisfying this requirement from an urethane raw material composed of polyol-containing liquid of the same composition and the same isocyanate component as those of the urethane raw material forming the under-buttocks section 2. It is preferable that the side bulging sections 4 are made of an urethane raw material composed of polyol-containing liquid of components different from that of the urethane raw material forming the under-buttocks section 2 and the under-thighs section 3 and an isocyanate component.

The same isocyanate component may be used all in the urethane raw material forming the under-buttocks section 2, the urethane raw material forming the under-thighs section 3, and the urethane raw material forming the side bulging sections 4.

The seat pad for vehicle of the present invention can be manufactured as follows.

A first polyol-containing liquid for forming the under-buttocks section 2 and the under-thighs section 3, a second polyol-containing liquid for forming the side bulging sections 4, and an isocyanate component are prepared. Urethane raw materials for the under-buttocks section 2 and the under-thighs section 3 are prepared by supplying the first polyol-containing liquid from a tank for the first polyol-containing liquid and the isocyanate component from a tank for the isocyanate component through supply lines and mixing them in different mixing rates to have different isocyanate indexes, respectively, and are injected into a mold. At the same time, an urethane raw material for forming the side bulging sections 4 are prepared by supplying the second polyol-containing liquid from a tank for the second polyol-containing liquid and the isocyanate component from the tank for the isocyanate component through supply lines and mixing them to have a predetermined isocyanate index and is injected into the mold.

Since the under-buttocks section 2 and the under-thighs section 3 are made of the urethane raw materials containing the polyol-containing liquid of the same composition but having different isocyanate indexes, the foaming speeds of the under-buttocks section 2 and the under-thighs section 3 are equal to each other. Therefore, it is difficult to produce a defect such as void and/or air trap in obtained product, thereby enabling the molding with good molding property. Since the under-buttocks section 2 and the under-thighs section 3 are made of the urethane raw materials containing the polyol-containing liquid of the same composition but having different isocyanate indexes, the under-buttocks section 2 and the under-thighs section 3 have similar texture and touch, thereby providing a comfortable seat pad for vehicle.

Since the side bulging sections 4 are made of the urethane raw material containing the polyol-containing liquid different from that of the under-buttocks section 2 and the under-thighs section 3, there is a possibility that defects are created at boundaries between the side bulging sections 4 and the under-buttocks section 2 and boundaries between the side bulging sections 4 and the under-thighs section 3. However, though the under-buttocks section 2 and the under-thighs section 3 compose the same seating portion, the side bulging sections 4 are separate members from the components of the seating portion. Even if there are defects at such boundaries, the defects have little effect on the seating comfort.

According to the present invention, it is preferable to form a seat pad for vehicle of which the under-buttocks section 2 has a 25% hardness of from 160 N to 300 N and the under-thighs section 3 has a 25% hardness of from 80 N to 250 N by controlling the isocyanate indexes of the urethane raw materials as mentioned above. The 25% hardness is measured according to JASO-M304.

The density of the under-buttocks section 2 and the under-thighs section 3 is preferably from 30 kg/m³ to 80 kg/m³.

Though the preferable isocyanate indexes of the urethane raw materials for forming the under-buttocks section 2 and the under-thighs section 3 vary depending on the used polyol-containing liquid and the like, generally the isocyanate index of the urethane raw material for forming the under-buttocks section 2 is preferably from 80 to 120 and the isocyanate index of the urethane raw material for forming the under-thighs section 3 is preferably from 70 to 110. The isocyanate index of the urethane raw material for forming the under-buttocks section 2 is preferably about 5 to 20 larger than the isocyanate index of the urethane raw material for forming the under-thighs section 3.

Though the hardness of the under-thighs section is set to be lower than that of the under-buttocks section by controlling the isocyanate indexes in the present invention, the hardness of the under-thighs section may be further reduced by designing the configuration, for example, to form a hollow core in the back of the under-thighs section in order to further improve the soft touch of the under-thighs section.

Hereinafter, the present invention will be concretely described with reference to an example and comparative

### examples.

In the following example and comparative examples, as the polyol-containing liquid for urethane raw materials, a polyol-containing liquid of the following components was used. As the isocyanate component, "Cornate T-80" available from Nippon Polyurethane Industry Co., Ltd. was used.

### [Components in Polyol-containing liquid (parts by weight)]

Polyol component ("EL 828" available from Asahi Glass Co., Ltd.): 100
Catalyst ("TEDAL 33" available from Tosoh Corporation): 0.5
Foaming agent ("3Y10-304" available from Toray Industries, Inc.): 0.5

### Example 1, Comparative Examples 1, 2

An urethane raw material for forming the under-buttocks section and an urethane raw material for forming the under-thighs section were prepared to have isocyanate indexes shown in Table 1 by mixing the aforementioned polyol-containing liquid and the isocyanate component and were injected into a mold, thereby forming a seat pad for vehicle.

Side bulging sections were formed by injecting an urethane raw material containing a polyol-containing liquid of components different from the above. The hardness of the under-thighs section was further reduced by designing the configuration such as to form a hollow core.

The density and the 25% hardness (JASO-M304) of the under-buttocks section and the under-thighs section of the obtained seat pad for vehicle were measured and the results are shown in Table 1.

**Table 1**

| Example | Section | Isocyanate Index of Urethane raw material | Density (kg/m³) | 25% hardness (N) |
|---|---|---|---|---|
| Example 1 | Under-buttocks section | 105 | 65 | 270 |
| | Under-thighs section | 90 | 65 | 200 |
| Comparative Example 1 | Under-buttocks section | 105 | 65 | 270 |
| | Under-thighs section | 105 | 65 | 240 |
| Comparative Example 2 | Under-buttocks section | 90 | 65 | 220 |
| | Under-thighs section | 90 | 65 | 200 |

The followings are apparent from Table 1.

Comparative Example 1 had a difference in hardness between the under-buttocks section and the under-thighs section such that the 25% hardness of the under-buttocks section was 270N while the 25% hardness of the under-thighs section was 240N because of the design of the back of the under-thighs section even though urethane raw materials used for forming the under-buttocks section and the under-thighs section had the same isocyanate index of 105.Since the generally-suitable hardness of under-thighs section considering the seating comfort is 230 N or less, however, the soft touch of the under-thighs section of Comparative Example 1 was not enough as compared to this value.

In Comparative Example 2 in which urethane raw materials used for forming the under-buttocks section and the under-thighs section had the same isocyanate index of 90, the soft touch of the under-thighs section was enough, but the hardness of the under-buttocks section was not enough.

On the other hand, in Example 1 in which urethane raw materials were prepared from the polyol-containing liquid of the same composition and the isocyanate component such that the under-buttocks section was made of the urethane raw material having an isocyanate index of 105 and the under-thighs section was made of the urethane raw material having an isocyanate index of 90, the hardness of the under-buttocks section was 270 N, i.e. enough, and the hardness of the under-thighs section was 200 N which was lower than 230 N so as to provide enough soft touch.

### INDUSTRIAL APPLICABILITY

As described in the above, according to the present invention, urethane raw materials for forming an under-buttocks section and an under-thighs section are prepared from polyol-containing liquid of the same composition and an isocyanate component and only the isocyanate indexes of the urethane raw materials are controlled, thereby achieving a seat pad for vehicle of which the under-buttocks section has enough high hardness providing excellent seating stability and the under-thighs section has low hardness providing soft touch.

Since the under-buttocks section and the under-thighs section are formed by using the polyol-containing liquid of the same composition and the isocyanate component, the following effects are exhibited and a comfortable seat pad for vehicle can be provided inexpensively.
(1) There is no difference in reaction speed between the urethane raw material for forming the under-buttocks section and the urethane raw material for forming the under-thighs section. There is no or little possibility of occurrence of defects such as void and/or air trap at a boundary between the under-buttocks section and the under-thighs section during the molding in a mold so that the seat pad for vehicle can be manufactured with good molding property.
(2) There is no or little difference in texture and touch between the under-buttocks section and the under-thighs section, thereby providing a comfortable seating portion provided with oneness.
(3) Common piping installations such as tanks and pipes can be used for the polyol-containing liquid and the isocyanate component as raw materials for the under-buttocks section and the under-thighs section, thereby reducing parts of the piping installations and reducing the equipment expenses. Man-hours required to procure materials and prepare the respective liquid materials can be also reduced, thereby reducing the manufacturing cost.

## Claims

1. A seat pad (1) for a vehicle, including a seating section manufactured by foaming a urethane raw material made by mixing polyol-containing liquid and an isocyanate component, wherein:
the seating section comprises an under-buttocks section (2) and an under-thighs section (3);
a urethane raw material for forming the under-buttocks section (2) and a urethane raw material for forming the under-thighs section (3) are prepared from the polyol-containing liquid of the same composition; and
the hardness of the under-thighs section (3) is set to be lower than the hardness of the under-buttocks section (2) by setting the isocyanate indexes of the urethane raw materials different from each other.

2. A seat pad as claimed in claim 1, wherein the urethane raw material for forming the under-buttocks section (2) and the urethane raw material for forming the under-thighs section (3) are prepared from the polyol-containing liquid of the same composition and the same isocyanate component, and wherein the mixing rates of the polyol-containing liquid and the isocyanate component in the urethane raw materials are different from each other.

3. A seat pad as claimed in claim 1 or 2, wherein the 25% hardness of the under-buttocks section (2) is from 160 N to 300 N and the 25% hardness of the under-thighs section (3) is from 80 N to 250 N.

4. A seat pad as claimed in any of claims 1 to 3, wherein the density of the under-buttocks section (2) and the under-thighs section (3) is from 30 kg/m³ to 80 kg/m³.

5. A seat pad as claimed in any of claims 1 to 4, wherein the isocyanate index of the urethane raw material for forming the under-buttocks section (2) is from 80 to 120 and the isocyanate index of the urethane raw material for forming the under-thighs section (3) is from 70 to 110.

6. A seat pad as claimed in claim 5, wherein the isocyanate index of the urethane raw material for forming the under-buttocks section (2) is from 5 to 20 larger than the isocyanate index of the urethane raw material for forming the under-thighs section (3).

7. A seat pad as claimed in any of claims 1 to 6, wherein the seat pad (1) further has side bulging sections (4) on both sides of the seating portion (2, 3) and the side bulging sections (4) are manufactured by foaming an urethane raw material employing polyol-containing liquid having a composition different from that of the polyol-containing liquid for the urethane raw materials for forming the under-buttocks section (2) and the under-thighs section (3).

8. A seat pad as claimed in any of claims 1 to 7, wherein the under-buttocks section (2) and the under-thighs section (3) have the same density.

## Patentansprüche

1. Sitzpolster (1) für ein Fahrzeug, einschließlich eines Sitzabschnitts, der gefertigt ist durch Schäumen eines Urethanrohmaterials, das durch Mischen einer Polyol enthaltenden Flüssigkeit und eines Isocyanatbestandteils hergestellt ist, wobei:
der Sitzabschnitt einen Abschnitt (2) unter dem Gesäß und einen Abschnitt (3) unter den Oberschenkeln umfasst,
ein Urethanrohmaterial zum Formen des Abschnitts (2) unter dem Gesäß und ein Urethanrohmaterial zum Formen des Abschnitts (3) unter den Oberschenkeln aus der Polyol enthaltenden Flüssigkeit mit der gleichen Zusammensetzung bereitet sind und
die Härte des Abschnitts (3) unter den Oberschenkeln so festgelegt ist, dass sie niedriger ist als die Härte des Abschnitts (2) unter dem Gesäß, durch Festlegen von Isocyanatindizes der Urethanrohinaterialien, die sich voneinander unterscheiden.

2. Sitzpolster nach Anspruch 1, wobei das Urethanrohmaterial zum Formen des Abschnitts (2) unter dem Gesäß und das Urethanrohmaterial zum Formen des Abschnitts (3) unter den Oberschenkeln aus der Polyol enthaltenden Flüssigkeit mit der gleichen Zusammensetzung und dem gleichen Isocyanatbestandteil bereitet sind und wobei sich die Mischungsverhältnisse der Polyol enthaltenden Flüssigkeit und des Isocyanatbestandteils in den Urethanrohmaterialien voneinander unterscheiden.

3. Sitzpolster nach Anspruch 1 oder 2, wobei die 25%ige Härte des Abschnitts (2) unter dem Gesäß von 160 N bis 300 N beträgt und die 25%ige Härte des Abschnitts (3) unter den Oberschenkeln von 80 N bis 250 N beträgt.

4. Sitzpolster nach einem der Ansprüche 1 bis 3, wobei die Dichte des Abschnitts (2) unter dem Gesäß und des Abschnitts (3) unter den Oberschenkeln von 30 kg/m³ bis 80 kg/m³ beträgt.

5. Sitzpolster nach einem der Ansprüche 1 bis 4, wobei der Isocyanatindex des Urethanrohmaterials zum Formen des Abschnitts (2) unter dem Gesäß von 80 bis 120 beträgt und der Isocyanatindex des Urethanrohmaterials zum Formen des Abschnitts (3) unter den Oberschenkeln von 70 bis 110 beträgt.

6. Sitzpolster nach Anspruch 5, wobei der Isocyanatindex des Urethanrohmaterials zum Formen des Abschnitts (2) unter dem Gesäß von 5- bis 20-mal größer ist als der Isocyanatindex des Urethanrohmaterials zum Formen des Abschnitts (3) unter den Oberschenkeln.

7. Sitzpolster nach einem der Ansprüche 1 bis 6, wobei das Sitzpolster (1) ferner auf beiden Seiten des Sitzabschnitts (2, 3) Seitenwölbungsabschnitte (4) hat und die Seitenwölbungsabschnitte (4) gefertigt sind durch Schäumen eines Urethanrohmaterials, das eine Polyol enthaltende Flüssigkeit einsetzt, die eine Zusammensetzung hat, die sich von derjenigen der Polyol enthaltenden Flüssigkeit für die Urethanmaterialien zum Formen des Abschnitts (2) unter dem Gesäß und des Abschnitts (3) unter den Oberschenkeln unterscheidet.

8. Sitzpolster nach einem der Ansprüche 1 bis 7, wobei der Abschnitt (2) unter dem Gesäß und der Abschnitt (3) unter den Oberschenkeln die gleiche Dichte haben.

## Revendications

1. Coussin de siège (1) pour un véhicule, englobant une section de siège fabriquée par moussage d'une matière brute d'uréthane produite en mélangent un liquide contenant du polyol et un composant d'isocyanate, dans lequel:
la section de siège comprend une section de support de fesses (2) et une section de support des cuisses (3);
une matière brute d'uréthane pour former la section de support des fesses (2) et une matière brute d'uréthane pour former la section de support des cuisses (3) sont préparées à partir du liquide contenant du polyol de la même composition ; et
la dureté de la section de support des cuisses (3) est ajustée de sorte à être inférieure à la dureté de la section de support des fesses (2) en ajustant les indices d'isocyanate des matières brutes d'uréthane, qui diffèrent l'un de l'autre.

2. Coussin de siège selon la revendication 1, dans lequel la matière brute d'uréthane pour former la section de support des fesses (2) et la matière brute d'uréthane pour former la section de support des cuisses (3) sont préparées à partir du liquide contenant du polyol de la même composition et du même composant d'isocyanate, les taux de mélange du liquide contenant du polyol et du composant d'isocyanate dans les matières brutes d'uréthane étant différents l'un de l'autre.

3. Coussin de siège selon les revendications 1 ou 2, dans lequel la dureté de 25% de la section de support des fesses (2) est comprise entre 160N et 300N, la dureté de 25% de la section de support des cuisses (3) étant comprise entre 80N et 250N.

4. Coussin de siège selon l'une quelconque des revendications 1 à 3, dans lequel la densité de la section de support des fesses (2) et de la section de support des cuisses (3) est comprise entre 30 kg/m³ et 80 kg/m³.

5. Coussin de siège selon l'une quelconque des revendications 1 à 4, dans lequel l'indice d'isocyanate de la matière brute d'uréthane pour former la section de support des fesses (2) est compris entre 80 et 120, l'indice d'isocyanate de la matière brute d'uréthane pour former la section de support des cuisses (3) étant compris entre 70 et 110.

6. Coussin de siège selon la revendication 5, dans lequel l'indice d'isocyanate de la matière brute d'uréthane pour former la section de support des fesses (2) est supérieur de 5 à 20 à l'indice d'isocyanate de la matière brute d'uréthane pour former la section de support des cuisses (3).

7. Coussin de siège selon l'une quelconque des revendications 1 à 6, dans lequel le coussin de siège (1) comporte en outre des sections latérales bombées (4) sur les deux côtés de la partie de siège (2, 3), les sections latérales bombées (4) étant fabriquées par moussage d'une matière brute d'uréthane utilisant un liquide contenant du polyol ayant une composition différente de celle du liquide contenant du polyol pour les matières brutes d'uréthane pour former la section de support des fesses (2) et la section de support des cuisses (3).

8. Coussin de siège selon l'une quelconque des revendications 1 à 7, dans lequel la section de support des fesses (2) et la section de support des cuisses (3) ont la même densité.
